## Europäisches Patentamt

## European Patent Office

## Office européen des brevets

(19)

(11) Veröffentlichungsnummer: **0 027 635**
**B1**

(12) **EUROPÄISCHE PATENTSCHRIFT**

(45) Veröffentlichungstag der Patentschrift:
18.07.84

(51) Int. Cl.³: **F 16 H 15/04**

(21) Anmeldenummer: **80106286.0**

(22) Anmeldetag: **16.10.80**

(54) **Stufenlos verstellbares Getriebe.**

(30) Priorität: **18.10.79 DE 2942076**

(43) Veröffentlichungstag der Anmeldung:
**29.04.81 Patentblatt 81/17**

(45) Bekanntmachung des Hinweises auf die Patenterteilung:
**18.07.84 Patentblatt 84/29**

(84) Benannte Vertragsstaaten:
**AT CH FR GB IT LI NL SE**

(56) Entgegenhaltungen:
**DE - A - 2 422 789**
**DE - A - 2 544 070**
**DE - C - 285 517**
**DE - C - 721 976**
**FR - A - 1 245 647**
**FR - A - 1 252 647**
**FR - A - 1 252 806**
**GB - A - 12 943**
**GB - A - 867 974**
**US - A - 1 537 515**
**US - A - 2 020 123**
**US - A - 2 682 776**
**US - A - 3 667 303**

(73) Patentinhaber: **Hofman, Detlef, Hauptstrasse 79,
D-7531 Kieselbronn (DE)**

(72) Erfinder: **Hofman, Detlef, Hauptstrasse 79,
D-7531 Kieselbronn (DE)**

(74) Vertreter: **Trappenberg, Hans, Wendtstrasse 1,
D-7500 Karlsruhe 21 (DE)**

BUNDESDRUCKEREI BERLIN

## Beschreibung

Die Erfindung betrifft ein stufenlos verstellbares Getriebe, gebildet aus zumindest einem Reibungsgliedpaar, das aus zwei relativ zueinander verschwenkbaren und mit jeweils einer An- und Abtriebswelle verbundenen Reibungsgliedern besteht, welche aus einer Hülse mit kegeliger Bohrung und einem in die Hülse eingreifenden Rotationsellipsoidkörper bestehen.

Bei einem bekannten derartigen Verstellgetriebe (US-A-3 667 303) ist die Abtriebswelle fest in einem Lagerbock gelagert, während die Antriebswelle mit einem aufgesetzten Motor zum Einstellen der gewünschten Abtriebsdrehzahl um diese feststehende Abtriebswelle herum verschwenkbar ist. Zum Einstellen einer gewünschten Drehzahl muß also stets der gesamte Motor mit dem jeweiligen Antriebsglied verschwenkt werden, was nicht nur wegen der Masse dieser Teile schwierig ist, sondern auch des öfteren aus Platzgründen nicht möglich ist.

In Anlehnung an die bekannten Getriebe dieser Art wäre anzustreben ein Verstellgetriebe, dessen relative Lage von Antriebswelle zu Abtriebswelle festliegt und die Änderung der Abtriebsdrehzahl über ein besonderes Stellglied erfolgen kann.

Aus der DE-C-721 976 ist ein stufenlos verstellbares Getriebe bekannt, welches ebenfalls Reibungsglieder aufweist, die zwar nicht so ausgebildet sind wie bei der Erfindung, bei denen jedoch die relative Lage von Antriebswelle zu Abtriebswelle festliegt. Die Änderung der Abtriebsdrehzahl erfolgt bei dem bekannten Getriebe durch Verschwenken eines mittleren Reibungsgliedpaares, also über ein besonderes Stellglied. Vorbedingung für diese Art Verstellung ist jedoch ein Reibwechselgetriebe mit geteilter Kugel, die so ausgebildet ist, daß ein ungeteilter Klemmring übergreifen kann und diese beiden geteilten, durch Federkraft gespreizten Halbkugeln in sich hält. Nur dann ist die Verstellung mittels des angeführten Stellgliedes möglich.

Bei dem erfindungsgemäßen Getriebe, bei dem die Reibungsgliedpaare aus einer Hülse mit kegeliger Bohrung und einem in die Hülse eingreifenden Rotationsellipsoidkörper bestehen, bei dem also kein den Rotationskörper umgreifender Klemmring vorhanden ist, kann eine Verstellung nicht mittels eines solchen Stellgliedes erfolgen.

Um trotzdem zu der gewünschten Ausgestaltung eines derartigen stufenlos verstellbaren Getriebes zu kommen, um also bei festliegender relativer Lage der Antriebs- zur Abtriebswelle eine Änderung der Abtriebsdrehzahl über ein besonderes Stellglied durchführen zu können, wird nach der Erfindung vorgeschlagen, daß eines der Reibungsglieder zumindest eines Reibungsgliedpaares exzentrisch in einer stellbaren Exzenterscheibe gelagert ist, wobei die Achse des exzentrisch gelagerten Reibungsgliedes parallel zur Exzenterscheibenachse verläuft.

Bei einer derartigen Anordnung ergibt sich nicht nur die gewünschte relative Lage von Antriebswelle zu Abtriebswelle und die Getriebeverstellung durch ein Stellglied, sondern es ergibt sich auch eine einfache und preiswerte Kraftübertragungsmöglichkeit zwischen dem Reibungsgliedpaar und der An- beziehungsweise Abtriebswelle durch stirnverzahnte Zahnräder, wobei sich die Welle des exzentrisch gelagerten Reibungsgliedes kreisförmig um diese An- beziehungsweise Abtriebswelle herumführen läßt. Eine sehr vorteilhafte Ausführung des stufenlos verstellbaren Getriebes nach der Erfindung ergibt sich dadurch, daß die Exzenterscheibenachse parallel zur Achse des Reibungsgliedes verläuft, das mit dem in der Exzenterscheibe gelagerten Reibungsglied zusammenarbeitet. Bei einer solchen Getriebeausführung liegen die Achsen von An- und Abtriebswelle parallel zueinander, was nicht nur der üblichen Anordnung bei Stirnradgetrieben entspricht, sondern im allgemeinen auch einen platzsparenden Einbau des Getriebes in Werkzeugmaschinen etc. zuläßt.

Eine weitere Möglichkeit ergibt sich dadurch, daß die Exzenterscheibenachse mit der Achse des Reibungsgliedes, das mit dem in der Exzenterscheibe gelagerten Reibungsglied zusammenarbeitet, einen stumpfen Winkel einschließt. Damit ist auch die Möglichkeit gegeben, eine entsprechende Anordnung von An- und Abtriebswelle vorzusehen.

Zu beachten ist, da bei einem Reibungsgliedpaar nur eine derartige gelenkige Verbindung zwischen der kegeligen Hülse und dem in diese Hülse eingreifenden Ellipsoidkörper gegeben ist, die zweite gelenkige Verbindung durch eine Zahnradverbindung oder zweckmäßigerweise durch ein weiteres Reibungsgliedpaar herbeigeführt werden kann. Der Einsatz eines weiteren Reibungsgliedpaares hat zudem den Vorteil, daß das Übersetzungsverhältnis zwischen An- und Abtriebswelle erhöht werden kann beziehungsweise daß bei der Einstellung der jeweils gewünschten Drehzahl nicht in die Extremlagen der Reibungsgliedpaare gefahren werden muß. Durch diese Maßnahme bleibt der diesen stufenlosen Verstellgetriebe eigene hohe Wirkungsgrad, der lediglich in den Extremlagen absinkt, trotz der Hintereinanderschaltung zweier Reibungsgliedpaare erhalten.

Abgesehen von der Möglichkeit, nunmehr die An- und Abtriebswelle in einer festen Lage mit einer jeweils gewünschten Relativlage der beiden Wellen zueinander anzuordnen, ergibt sich nunmehr der außerordentliche Vorteil, daß die Übersetzung mittels eines Stellgliedes, das mit verhältnismäßig geringer Stellkraft verstellt werden kann, einzustellen ist. Damit eröffnet sich auch die Möglichkeit, das stufenlos verstellbare Getriebe nach der Erfindung nicht nur als Stellgetriebe, sondern auch als äußerst exakt nachführbares Regelgetriebe einzusetzen. Hierzu empfiehlt es sich, die Exzenterscheibe über eine Servokraft einzustellen und die Drehgeschwindigkeit der Verdrehbewegung der Exzenterscheibe über Dämpferglieder zu beeinflussen.

Bei Reibungsgliedern, die aus einer Hülse mit kegeliger Bohrung in einem in die Hülse eingreifenden Rotationsellipsoidkörper bestehen, ergibt sich beim Ablauf der Reibbewegung in der berührenden Hertz'schen Fläche eine zu einem tangentialkraftabhängigen Parallelschlupf noch eine Umlaufbewegung um eine senkrecht zur Berührfläche stehende Achse, eine Bohrbewegung beziehungsweise eine Bohrreibung. Dadurch besteht bei einem erfindungsgemäßen Getriebe auch die Möglichkeit die durch diese Bohrreibung hervorgerufene Kraft auszunutzen, die bestrebt ist, die beiden Reibungsglieder eines Reibungsgliedpaares in die Strecklage, also in die Übersetzung 1 : 1 zu führen. Damit kann beispielsweise — in Verbindung mit einem Dämpferglied — das selbständige allmähliche Hochfahren eines Aggregates bewirkt oder auch die allmähliche Angleichung der Drehzahl einer Antriebskraft an die Drehzahl eines weiteren Aggregates erreicht werden. Beispielsweise bietet sich das Getriebe nach der Erfindung durch diese innewohnende Automatik als Automatikgetriebe für Kraftfahrzeuge an, um einmal das Kraftfahrzeug zu beschleunigen und zum anderen, weitgehend unabhängig von der Geschwindigkeit des Kraftfahrzeuges, die Motordrehzahl in einem optimalen Wirkungsgradbereich zu halten.

Durch das gegenseitige Verschwenken der Reibungsglieder eines Reibungsgliedpaares verändert sich selbstverständlich auch der Abstand der zugehörigen Krafteinleitstellen, also entweder der Abstand zu einem weiteren Reibungsgliedpaar oder zu der An- beziehungsweise Abtriebsstelle. Diese Abstandsdifferenz kann, wie bei den bekannten Getrieben nach der US-A-3 667 303 beziehungsweise DE-C-721 976 vorgesehen, dadurch ausgeglichen werden, daß eines der Reibungsglieder längsverschieblich auf seiner zugehörigen Achse angeordnet ist oder, nach der Erfindung dadurch, daß die Exzenterscheibe gegen eine Rückstellkraft axial verschiebbar angeordnet wird. Da die Exzenterscheibe als größeres Bauelement wesentlich einfacher verschiebbar zu lagern ist und außerdem an der Drehung der Getriebeglieder nicht teilnimmt, ist hier die notwendige Axialverschiebung wesentlich einfacher durchzuführen als an den Reibungsgliedern selbst.

Ein einfaches Getriebe nach der Erfindung kann dadurch hergestellt werden, daß die Ellipsoidkörper zweier hintereinander geschalteter Reibungsgliedpaare über eine Welle miteinander verbunden sind und die Welle in der Exzenterscheibe, gleichlaufend zur Achse der Exzenterscheibe, gelagert ist. Die Übersetzungseinstellung wird hierbei so vorgenommen, daß das antreibende Reibungsgliedpaar in der gestreckten Lage mit der Übersetzung 1 : 1 und das folgende Reibungsgliedpaar in der abgewinkelten Lage also mit der maximalen Untersetzung angeordnet wird. Bei Verdrehen der Exzenterscheibe ändern sich die Übersetzungsverhältnisse derart, daß in der Extremlage, also bei abgewinkeltem Antriebs-Reibungsgliedpaar, maximal übersetzt wird, während sich das Abtriebs-Reibungsgliedpaar in der gestreckten Lage mit der Übersetzung 1 : 1 befindet. Zur Aufnahme der Schwenkbewegungen der gegenüberliegenden kegeligen Hülsen empfiehlt es sich, jeweils weitere Reibungsgliedpaare vor- beziehungsweise nachzuschalten, wodurch sich nicht nur auf einfachste Weise An- und Abtriebswellen parallel legen lassen, sondern sich auch ein sehr effektives vierstufiges Getriebe mit hohem Übersetzungsverhältnis ergibt. Da bei einem solchen vierstufigen Getriebe lediglich die An- und Abtriebswellen sowie die mittlere, die beiden Ellipsoidkörper tragende Welle gelagert sind, empfiehlt es sich, auf Zwischenwellen zwischen den Ellipsoidkörpern zu verzichten und statt dessen, in erfindungsgemäßer Weise, die kegelige Hülse des vorgeschalteten Reibungsgliedpaares in den Ellipsoidkörper des nachgeschalteten Reibungsgliedpaares einzufügen. Dadurch wird nicht nur die Lagerung der einzelnen Getriebeteile, also die Lagerung der Ellipsoidkörper in den zugehörigen kegeligen Hülsen, verbessert und frei von Torsionsschwingungen, sondern es wird dadurch auch eine sehr kompakte Getriebeausführung erzielt.

Auf der Zeichnung sind Ausführungsbeispiele des stufenlos verstellbaren Getriebes nach der Erfindung schematisch dargestellt, und zwar zeigt

Fig. 1 ein zweistufiges Getriebe mit parallel angeordneter An- und Abtriebswelle,

Fig. 2 ein weiteres zweistufiges Getriebe mit einen Winkel einschließender An- und Abtriebswelle und

Fig. 3 ein vierstufige Getriebe.

In einem Getriebegehäuse 1 ist drehbar und axial verschiebbar eine Exzenterscheibe 2 gelagert. Durch eine Feder 3 wird die Exzenterscheibe 2 von der Stirnwand des Gehäuses abgedrückt. Die Exzenterscheibe 2 ist mit einem Zahnkranz 4 verbunden, in den ein Zahnrad 5, das mit einer Stellwelle 6 verbunden ist, eingreift.

Auf der Stellwelle 6 ist eine Schraubenfeder 7 angeordnet, die ein Drehmoment auf die Stellwelle 6 ausübt. Die Stärke des Drehmomentes kann durch Verdrehen der Federfassung 8 und Feststellen durch eine Stellschraube 9 eingestellt werden.

In der Stirnwand 10 des Gehäuses 1 ist fliegend eine Abtriebswelle 11 gelagert. Die Abtriebswelle 11 trägt ein Stirnzahnrad 12, das in einem Ritzel 13 kämmt. Das Ritzel 13 befindet sich auf einer Führungswelle 14, die mit einer kegeligen Hülse 15 verbunden ist. In diese kegelige Hülse 15 greift ein Ellipsoidkörper 16 ein, der wiederum, über eine kurze Zwischenwelle 17 eine zweite kegelige Hülse 18 trägt. Eingreifend in diese kegelige Hülse 18 ist ein weiterer Ellipsoidkörper 19 angeordnet, der an der Antriebswelle 20 eines Antriebsmotores 21 sitzt.

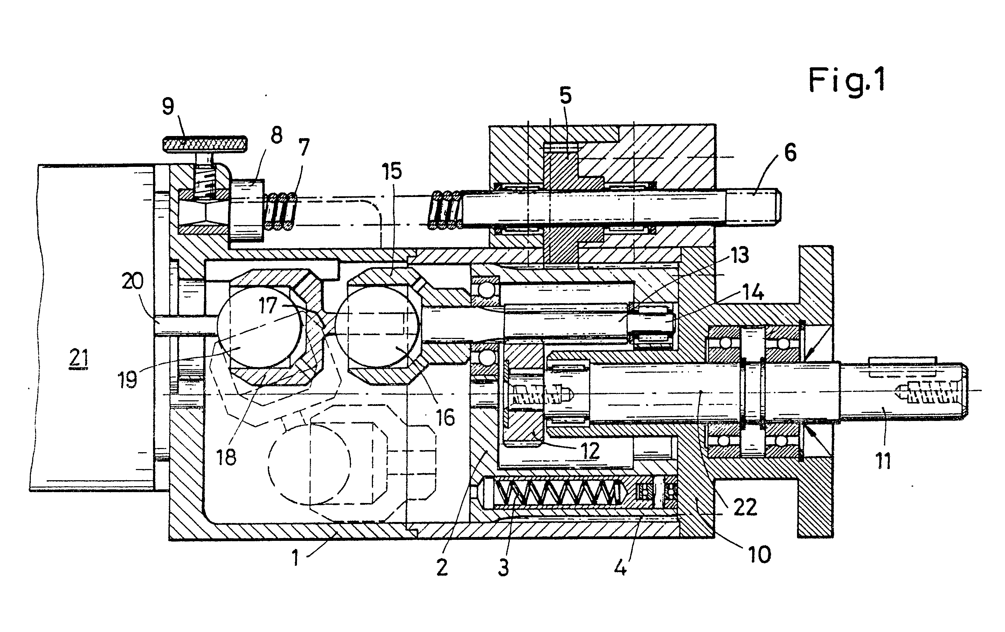

Nach der Zeichnung (Fig. 1) befinden sich beide hintereinander geschalteten Reibungsgliedpaare 19/18 und 16/15 in der gestreckten Lage, beide haben also das Übersetzungsverhältnis 1 : 1. Der Kraftfluß geht daher vom Antriebsmotor 21 über die Antriebswelle 20, den Ellipsoidkörper 19 auf die kegelige Hülse 18, weiter über die Zwischenwelle 17 zum Ellipsoidkörper 16 und dort in die kegelige Hülse 15. Über die Welle 14 und Zahnradpaar 13/12 wird sodann die Abtriebswelle 11 angetrieben.

Zur Änderung des Übersetzungsverhältnisses wird die Exzenterscheibe 2 durch die Stellwelle 6 verdreht. Hierbei nimmt die Exzenterscheibe 2 die in ihr gelagerte Welle 14 und damit auch die kegelige Hülse 15 mit, die kegelige Hülse 15 wird also in einer Kreisbahn um die Achse 22 der Exzenterscheibe beziehungsweise der gleichlaufenden Abtriebswelle 11 herumgeführt. Hierbei bleibt der Kraftschluß über das Ritzel 13 beziehungsweise das Zahnrad 12 mit der Abtriebswelle 11 erhalten. Durch die Verdrehung der kegeligen Hülse 15 wird der in sie eingreifende Ellipsoidkörper 19 beziehungsweise dessen Achse 20 verschwenkt. Um zu vermeiden, daß bei dieser Verschwenkbewegung die Ellipsoidkörper 16, 19 außer Eingriff mit ihren zugehörigen kegeligen Hülsen 15, 18 kommen, wird die Exzenterscheibe 2 durch die Kraft der Feder 3 axial verschoben, die Abstandsverminderung zwischen dem Ellipsoidkörper 19 und der kegeligen Hülse 15 über die verschwenkte kegelige Hülse 18 mit Zwischenwelle 17 und Ellipsoidkörper 16 also ausgeglichen. Durch diesen Ausgleich bleiben die einzelnen Reibungsglieder der beiden Reibungsgliedpaare immer in Eingriff, jedoch kann durch einen einzufügenden Stellhebel die Axialverschiebung der Exzenterscheibe 2 gehemmt werden, so daß ab dieser Stellung der Exzenterscheibe 2 das Getriebe, da die Haftreibung zwischen den Reibungsgliedpaaren 15/16, 18/19 aufgehoben wird, auskuppelt.

Die Drehbewegung der Exzenterscheibe 2 kann weitergeführt werden bis zu einer Extremstellung, die in Fig. 1 gestrichelt eingezeichnet ist. Die Reibungsglieder 15/16, 18/19 beider Reibungsgliedpaare sind hierbei relativ zueinander maximal abgewinkelt, so daß sich in dieser Extremlage die größtmögliche Untersetzung von Antriebswelle 20 zu Abtriebswelle 11 ergibt. Durch weiterführende Drehbewegung der Exzenterscheibe 2 oder durch entsprechende Zurückführung kann wieder der vorherige Zustand beziehungsweise jede gewünschte Übersetzungsstellung zwischen diesen beiden Extremlagen erreicht werden.

Da durch die Bohrreibung zwischen den Reibungsgliedpaaren 15/16, 18/19 eine Strecklage dieser Reibungsgliedpaare 15/16, 18/19 erzwungen wird, sind sämtliche Übersetzungsstellungen, die von der gestreckten Lage dieser Reibungsgliedpaare 15/16, 18/19 abweichen, durch Arretieren der Exzenterscheibe 2 zu fixieren. Geschieht dies nicht, wandert die Exzenterscheibe 2 in die gezeichnete Lage, die der Strecklage beider Reibungsgliedpaare 15/16, 18/19 ent

spricht. Diese Verdrehbewegung der Exzenterscheibe 2 beziehungsweise die damit verbundene Übersetzungsänderung kann unterstützt oder gehemmt werden durch die Kraft der Schraubenfeder 7, die über die Stellwelle 6 und das Zahnrad 5 auf die Exzenterscheibe 2 einwirkt. Statt der Feder 7 kann hier selbstverständlich auch ein Dämpferglied eingefügt werden oder es kann an der Stellwelle 6 auch eine Servokraft, beispielsweise die Ausgangskraft einer Regeleinrichtung, angreifen.

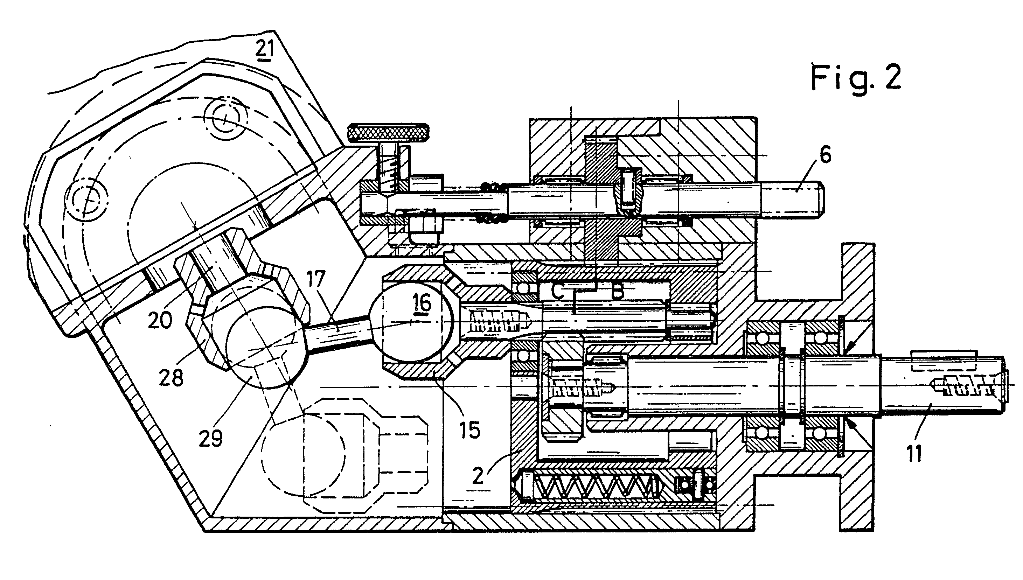

Nahezu gleich wie das Getriebe nach Fig. 1 ist dasjenige nach Fig. 2 aufgebaut. Der gravierende Unterschied zwischen beiden Getrieben besteht darin, daß die Antriebswelle 11 mit der Abtriebswelle 20 einen Winkel einschließt und daß die Reibungsgliedpaare 15/16 und 28/29 nunmehr gegeneinander geschaltet sind. Dies bedingt, daß auf der Zwischenwelle 17 nunmehr beide Ellipsoidkörper 16, 29 der beiden Reibungsgliedpaare 15/16, 28/29 angeordnet sind. Diese Anordnung ist dann von Interesse, wenn das von der Bohrreibung in den Reibungsgliedpaaren 15/16, 28/29 hervorgerufene Drehmoment auf die Exzenterscheibe 2 beziehungsweise die Stellwelle 6 beeinflußt werden soll, da sich bei dieser Lage die beiderseitigen Drehmomente, deren Stärke mit dem Ausschwenkwinkel sinusförmig verläuft, nicht direkt, sondern phasenverschoben addieren. Außerdem kann die hier gezeigte Anordnung des Antriebsmotors 21 von Interesse sein. Ist dies nicht der Fall, kann unschwer durch Nachschalten eines weiteren Reibungsgliedpaares auch die Antriebswelle parallel verlaufend zu der Abtriebswelle 11 angeordnet werden.

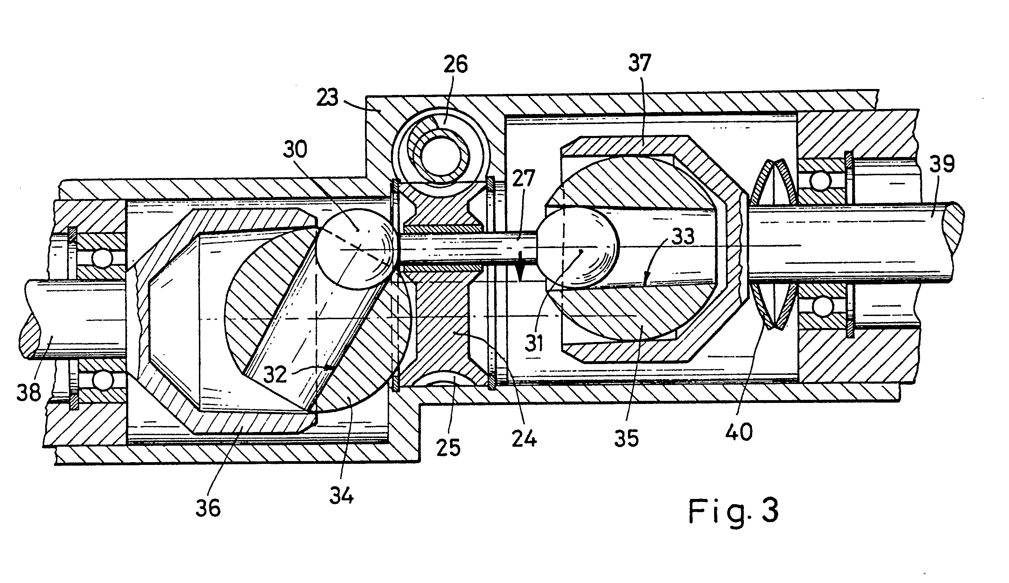

Eine weitere sehr interessante Möglichkeit ist in Fig. 3 dargestellt. In einem Gehäuse 23 ist hier wiederum eine Exzenterscheibe 24, verdrehbar durch eine auf eine Außenzahnung 25 der Exzenterscheibe 24 eingreifende Schnecke 26 gelagert. In der Exzenterscheibe 24 axial verschiebbar gelagert ist eine Zwischenwelle 27, die beidseits Ellipsoidkörper 30, 31 trägt. Diese Ellipsoidkörper 30, 31 greifen in kegelige Hülsen 32, 33 ein, deren Außenseiten wiederum Ellipsoidkörper 34, 35 darstellen. Diese Ellipsoidkörper 34, 35 arbeiten ihrerseits mit kegeligen Hülsen 36, 37 zusammen und werden in diesen kegeligen Hülsen 36, 37 auch geführt beziehungsweise gelagert. Mit den kegeligen Hülsen 36, 37 ist jeweils die Antriebswelle 38 beziehungsweise Abtriebswelle 39 verbunden.

Wird über die Antriebswelle 38 angetrieben, so ergibt sich bei der abgewinkelten Anordnung des Ellipsoidkörpers 34 eine Untersetzung, ebenso wie in dem nachgeschalteten Reibungsgliedpaar 32/30. Die folgenden Reibungsgliedpaare 31/33 und 35/37 befinden sich in Strecklage, also in dem Übersetzungsverhältnis 1 : 1. Durch Drehen der Exzenterscheibe 24 über den Schnekkentrieb 25, 26 ergibt sich allmählich ein Einlauf der Reibungsgliedpaare 30/32 und 34/36 in die Strecklage und damit in das Übersetzungsverhältnis 1 : 1. Die nachgeschalteten Reibungsgliedpaare 31/33 und 35/37 hingegen werden immer mehr abgewinkelt, bis sie in die Extremlage kommen, bei dem beide Reibungsgliedpaare ins Langsame untersetzen. Insgesamt ergibt sich somit ein Übersetzungsverhältnis von etwa 1 : 20. Die durch die Verschwenkbewegung der kombinierten Ellipsoidkörper/Hülse 32/34 und 33/35 erzwungene Abstandsänderung von den kegeligen Hülsen 36, 37 wird durch axiale Verschiebung der Zwischenwelle 27 in der Exzenterscheibe 24 ausgeglichen, wobei Blattfedern 40 für eine ständige gegenseitige Anlage der einzelnen Teile sorgen.

Auch bei dieser Konstruktion ergibt sich ein Drehmoment auf die Exzenterscheibe 24, hervorgerufen durch die Bohrungsreibung in den vier Reibungsgliedpaaren 30/32, 31/33, 34/36 und 35/37, das nunmehr hauptsächlich durch die Bohrungsreibung des Reibungsgliedpaares beziehungsweise der Reibungsgliedpaare mit dem größeren Drehmoment, also durch die Reibungsgliedpaare mit der niedrigeren Drehzahl bestimmt wird. Auch hier ist wieder statt des Antriebes der Exzenterscheibe 24 über einen Schneckentrieb 25, 26 die Anbringung von Dämpfergliedern oder von Servo-Stellgliedern möglich.

## Patentansprüche

1. Stufenlos verstellbares Getriebe, gebildet aus zumindest einem Reibungsgliedpaar, das auch zwei relativ zueinander verschwenkbaren und mit jeweils einer An- und Abtriebswelle verbundenen Reibungsgliedern besteht, welche aus eine Hülse mit kegeliger Bohrung und einem in die Hülse eingreifenden Rotationsellipsoidkörper bestehen, dadurch gekennzeichnet, daß eines der Reibungsglieder (15, 30, 31) zumindest eines Reibungsgliedpaares (15/16, 30/32, 31/33) exzentrisch in einer stellbaren Exzenterscheibe (2, 24) gelagert ist, wobei die Achse des exzentrisch gelagerten Reibungsgliedes (15, 30, 31) parallel zur Exzenterscheibenachse (22) verläuft.

2. Getriebe nach Anspruch 1, dadurch gekennzeichnet, daß die Exzenterscheibenachse (22) parallel zur Achse des Reibungsgliedes (19, 36, 37) verläuft, das mit dem in der Exzenterscheibe (2, 24) verlagerten Reibungsglied (15, 30, 31) direkt oder über ein weiteres Reibungsgliedpaar (18/19, 34/36, 35/37) zusammenarbeitet.

3. Getriebe nach Anspruch 1, dadurch gekennzeichnet, daß die Exzenterscheibenachse (22) mit der Achse des Reibungsgliedes (28), das mit dem in der Exzenterscheibe (2) gelagerten Reibungsglied (15) direkt oder über ein weiteres Reibungsgliedpaar (28/29) zusammenarbeitet, einen stumpfen Winkel einschließt.

4. Getriebe nach einem oder mehreren der vorhergehenden Ansprüche, dadurch gekennzeichnet, daß die Exzenterscheibe (2, 24) über eine Servokraft einstellbar ist.

5. Getriebe nach Anspruch 4, dadurch gekennzeichnet, daß die Drehgeschwindigkeit der Verdrehbewegung der Exzenterscheibe (2, 24) über Dämpferglieder beeinflußbar ist.

6. Getriebe nach einem oder mehreren der vorhergehenden Ansprüche, dadurch gekennzeichnet, daß an der Exzenterscheibe (2) eine die Verdrehbewegung beeinflussende Federkraft (7) angreift.

7. Getriebe nach einem oder mehreren der vorhergehenden Ansprüche, dadurch gekennzeichnet, daß die Exzenterscheibe (2) gegen eine Rückstellkraft (3) axial verschiebbar ist.

8. Getriebe nach Anspruch 7, dadurch gekennzeichnet, daß ein manuell oder über Servokraft einstellbarer Stellhebel zum Einstellen der axialen Lage der Exzenterscheibe (2) vorgesehen ist.

9. Getriebe nach Anspruch 8, dadurch gekennzeichnet, daß der Stellhebel als Stellanschlag ausgebildet ist.

10. Getriebe nach einem oder mehreren der vorhergehenden Ansprüche, dadurch gekennzeichnet, daß bei dem zumindest einem Reibungsgliedpaar (30/32, beziehungsweise 31/33) ein weiteres Reibungsgliedpaar (34/36 beziehungsweise 35/37) nachgeschaltet ist, wobei die kegelige Hülse (32, 33) des vorgeschalteten Reibungsgliedpaares (30/32, 31/33) in den Ellipsoidkörper (34, 35) des nachgeschalteten Reibungsgliedpaares (31/36 beziehungsweise 35/37) eingefügt ist.

11. Getriebe nach Anspruch 10, dadurch gekennzeichnet, daß die kegelige Hülse (32 beziehungsweise 33) und der Ellipsoidkörper (34 beziehungsweise 35) einstückig sind.

## Claims

1. A continuously variable transmission formed by at least one pair of frictional members which consists of two frictional members displaceable relative to each other and connected, respectively, to a driving shaft and a driven shaft, the frictional members consisting of a socket having a conical bore and a body in the shape of an ellipsoid of rotation, characterized in that one of the frictional members (15, 30, 31) of at least one pair (15/16, 30/32, 31/33) of frictional members is eccentrically mounted in an adjustable eccentric disc (2, 24), the axis of the eccentrically mounted frictional member (15, 30, 31) extending parallel to the axis (22) of the eccentric disc.

2. A transmission according to claim 1, characterized in that the axis (22) of the eccentric disc is parallel to the axis of the frictional member (19, 36, 37) which co-operates with the frictional members (15, 30, 31) mounted in the eccentric disc (2, 24) either directly of via a further pair (18/19, 34/36, 35/37) of frictional members.

3. A transmission according to claim 1, characterized in that the axis (22) of the eccentric disc makes an obtuse angle with the axis of the frictional member (28) which co-operates with the frictional member (15) mounted in the eccentric disc (2) either directly or via a further pair (28/29) of frictional members.

4. A transmission according to any one of the preceding claims, characterized in that the eccentric disc (2, 24) is adjustable by a servoforce.

5. A transmission according to claim 4, characterized in that the rotational speed of the turning motion of the eccentric disc (2, 24) may be influenced by damper elementes.

6. A transmission according to any one of the preceding claims, characterized in that a spring force (7) influencing the turning motion acts on the eccentric disc (2).

7. A transmission according to any one of the preceding claims, characterized in that the eccentric disc (2) is axially displaceable against a resetting force (3).

8. A transmission according to claim 7, characterized in that a setting lever, adjustable either manually or by a servoforce, is provided for the adjustment of the frictional position of the eccentric disc (2).

9. A transmission according to claim 8, characterized in that the setting lever is formed as an adjustable abuttment.

10. A transmission according to any one of the preceding claims, characterized in that downstream of at least one pair (30/32 or 31/33) of frictional members is situated a further pair (34/36 or 35/37) of frictional members, and the conical socket (32, 33) of the upstream situated pair (30/32, 31/33) of frictional members is introduced in the ellipsoid body 34, 35) of the downstream situated pair (31/36 or 35/37) of frictional members.

11. A transmission according to claim 10, characterized in that the conical socket (32 or 33) and the ellipsoid body (34 or 35) are made in one piece.

## Revendications

1. Mécanisme de transmission à rapport de vitesse variable en cotinu, constitué par au moins une paire d'organes à friction qui consiste en deux organes à friction reliés respectivement à un arbre entraîneur et un arbre entraîné, qui comprennent chacun une douille pourvue d'un alésage conique et un corps de rotation ellipsoîde engagé dans la douille, mécanisme caractérisé en ce que l'un des organes à friction (15, 30, 31) d'au moins une paire d'organes à friction (15/16, 30/32, 31/33) est supporté excentriquement dans une plaque excentrique réglable en positions (2, 24), l'axe de l'organe à friction supporté excentriquement (15, 30, 31) étant parallèle à l'axe de la plaque d'excentrique (22).

2. Mécanisme suivant la revendication 1, caractérisé en ce que l'axe de la plaque d'excentrique (22), s'étend parallèlement à l'axe de l'organe à friction (19, 36, 37), lequel coopère avec l'organe à friction (15, 30, 31) qui est supporté dans la plaque d'excentrique (2, 24), directement, ou par l'intermédiaire d'une autre paire d'organes à friction (18/19, 34/36, 35/37).

3. Mécanisme suivant la revendication 1, caractérisé en ce que l'axe de la plaque d'excentrique (22) forme avec l'axe de l'organe à friction (28), qui coopère avec l'organe à friction (15) supporté dans la plaque d'excentrique (2), directement ou par l'intermédiaire d'une autre paire d'organes à friction (28/29), un angle obtus.

4. Mécanisme suivant une ou plusieurs des revendications 1 à 3, caractérisé en ce que la plaque d'excentrique (2, 24) est réglable en position au moyen d'une force asservie.

5. Mécanisme suivant la revendication 4, caractérisé en ce que la vitesse de rotation du mouvement de rotation de la plaque d'excentrique (2, 24) est soumise à l'influence d'organes d'amortissement.

6. Mécanisme suivant une ou plusieurs des revendications 1 à 5, caractérisé en ce que, sur la plaque d'excentrique (2) est appliquée une force de ressort (7), qui influence le mouvement de rotation.

7. Mécanisme suivant l'une ou plusieurs des revendications 1 à 6, caractérisé en ce que la plaque d'excentrique (2) est déplaçable axialement contre une force de rappel en position (3).

8. Mécanisme suivant la revendication 7, caractérisé en ce que, pour le réglage en position axiale de la plaque d'excentrique (2), est prévu un levier de réglage réglable en position directement ou par une force d'asservissement.

9. Mécanisme suivant la revendication 8, caractérisé en ce que le levier de réglage est constitué par une butée de positionnement.

10. Mécanisme suivant une ou plusieurs revendications 1 à 9, caractérisé en ce que, en aval d'au moins une paire d'organes à friction (30/32, 31/33), est montée une autre paire d'organes à friction respective (34/36, 35/37), la douille conique (32, 33) de la paire d'organes à friction montée en avant (30/32, 31/33) étant engagée dans le corps ellipsoîde (34, 35) de la paire d'organes à friction montée en aval (respectivement 31/36, 35/37).

11. Mécanisme suivant la revendication 10, caractérisé en ce que la douille conique (32 et respectivement 33) est réalisée en une seule pièce avec le corps ellipsoîde respectif (34, 35).

Fig.1

0 027 635

Fig. 2

Fig. 3

0 027 635